(19) Europäisches Patentamt
European Patent Office
Office européen des brevets

(11) **EP 4 482 722 B1**

(12) **EUROPEAN PATENT SPECIFICATION**

(45) Date of publication and mention of the grant of the patent:
**22.04.2026 Bulletin 2026/17**

(21) Application number: **23711730.4**

(22) Date of filing: **16.03.2023**

(51) International Patent Classification (IPC):
**B60T 17/22** *(2006.01)*    **F16D 66/02** *(2006.01)*

(52) Cooperative Patent Classification (CPC):
**B60T 17/22; F16D 66/02; F16D 66/021; F16D 66/022; F16D 66/026; F16D 66/027;** F16D 2066/001; F16D 2066/006

(86) International application number:
**PCT/EP2023/056727**

(87) International publication number:
**WO 2023/180159 (28.09.2023 Gazette 2023/39)**

(54) **AN ESTIMATION METHOD FOR WEAR IN A VEHICLE BRAKE ELEMENT**

SCHÄTZUNGSVERFAHREN FÜR VERSCHLEISS IN EINEM FAHRZEUGBREMSELEMENT

PROCÉDÉ D'ESTIMATION D'USURE DANS UN ÉLÉMENT DE FREIN DE VÉHICULE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **25.03.2022 IT 202200005993**

(43) Date of publication of application:
**01.01.2025 Bulletin 2025/01**

(73) Proprietor: **ITT Italia S.r.l.**
**20020 Lainate (MI) (IT)**

(72) Inventors:
• **BIBBONA, Enrico**
  **10143 Torino (IT)**
• **PICASSO, Francesco**
  **00015 Monterotondo (Roma) (IT)**
• **VIGNOLO, Umberto**
  **10060 Porte (Torino) (IT)**
• **MACCHI, Pietro**
  **10151 Torino (IT)**

(74) Representative: **Rapisardi, Mariacristina**
**Ufficio Brevetti Rapisardi S.r.l.**
**Via Serbelloni, 12**
**20122 Milano (IT)**

(56) References cited:
**EP-A1- 3 299 234        EP-A2- 1 950 111**
**WO-A1-2017/188282        WO-A1-2018/099864**
**WO-A1-2020/127210        DE-A1- 10 029 238**
**DE-A1- 10 233 844        DE-A1- 19 943 352**
**GB-A- 2 583 486        US-A1- 2022 034 379**
**US-B2- 10 486 674**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

STATE OF THE ART

The following explanation relates to a method of estimating wear of a vehicle brake element.

SUMMARY

Vehicle brake element wear sensors have been on the market for a long time and are well-known devices.

The known types of wear sensors for vehicle brake elements can be identified by their most important operating principle, such as electrical wear sensors and mechanical wear sensors.

The operating principle of electrical wear sensors involves resistor circuits, which, when there is a decrease in the thickness of the brake element, typically a disc brake pad, they create a contact between the metal disk and a sensitive area or break the electrical circuit and send a warning signal; more than one circuit may be provided at different pad depths, so that warning signals are processed by the vehicle's computer to calculate the remaining useful life of the brake pad.

Two main versions of the electric wear sensors are available on the market: incorporated into the brake pads, or a separate sensor mounted on the brake pad and designed to maintain friction contact with the surface of the brake rotor.

Mechanical wear indicators rely on a modified back-plate that generates noise when the amount of friction material left in the pad reaches a designated reduced thickness.

The position-sensor wear indicator measures the position of the brake mechanics and sends a warning signal to the driver when a designated position has been reached.

Mixed-operation system wear sensors are also known of and available on the market.

A known type of Electronic Parking Brake (EPB) can also detect pad wear by counting the number of screw/nut turns required to engage the rear brake pads - more rotations means less pad thickness.

Innovatively, patent application IT 102021000005636 filed by this same applicant discloses a method for estimating the wear of a vehicle brake element by processing temperature signals acquired on the support bracket of that element.

In said patent application, the wear of a brake element is estimated based on the variation over time of the temperature detected over long periods of time for a series of homogeneous braking events.

There is also a need, moreover, to improve a brake element's wear estimate by making it independent of capturing the temperature change detected over long periods for a series of homogeneous braking events.

DE 102 33 844 A1 disclose a method and device for monitoring the operational state and/or the wear of brake linings and/or brake discs of a vehicle brake; DE 199 43 352 A1 discloses a device and method for determining the temperature of a brake element provided on a vehicle; US 20220343789 A1 shows a wear volume estimation device, wear volume estimation method, and wear volume estimation program; WO 2017188282 A1 relates to abrasion amount estimation apparatus and abrasion amount estimation method; US 10486674 B2 discloses a brake pad life prognosis system for regenerative braking vehicles; GB 2583486 A refers to brake characteristics; finally WO 2018 099 864 A1 discloses a method, system predicting the wear based on sensed temperatures.

The technical task described in the present explanation, therefore, is to overcome the current limitations of known wear sensors and to improve their performance and reliability.

The technical task according to the present explanation is accomplished by providing a vehicle brake element wear estimation method according to Claim 1.

In one embodiment, the capture of the detected temperature of said back support plate is activated at each braking activation instant t1 on said braking disc and up to a predetermined instant t2 after braking release.

In one embodiment, each increase in wear is calculated at each acquisition of said detected temperature of said back support plate.

In one embodiment, the estimate of the thickness of said wear-able block of friction material is performed in real time.

The present invention also describes a vehicle brake element including a wear-able block of friction material, a back support plate of said block of friction material, a temperature sensor configured and positioned to detect the temperature of said back support plate and an electronic processing unit configured to carry out the wear estimation method described above.

BRIEF DESCRIPTION OF DRAWINGS

Various forms of implementation are portrayed in the attached drawings for purely illustrative purposes and must not in any way be interpreted as restricting the scope of this invention.

Various features of the different embodiments may be combined to constitute additional embodiments, which are also part of this invention.

Figure 1 schematically shows angle 1 of a vehicle suitably equipped with the components of the method;
Figures 1a to 1f show options for the placement of the temperature sensor, which may be of the contact or non-contact type;
Figure 2 schematically illustrates a system architecture for the method with smart brake pad sensors and time-based data capture;
Figure 3 schematically illustrates a system architecture for the method with smart brake pad sensors and activation-based data capture;
Figure 4 schematically illustrates a system architecture for the method with data capture based on activation of the brake;
Figure 5 schematically illustrates a flow diagram of the algorithm;

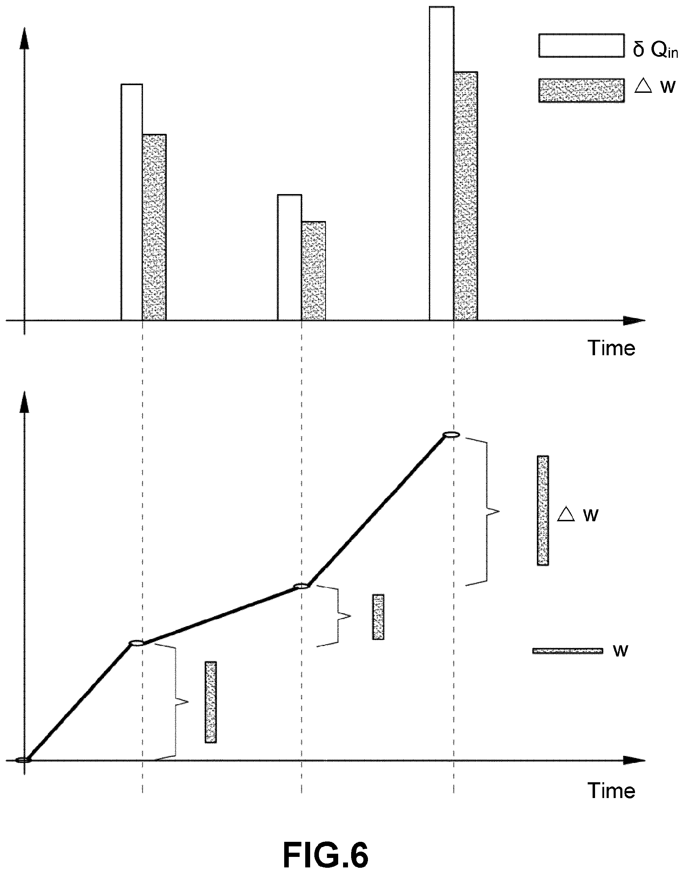

Figure 6 schematically shows the determination of successive estimates of wear increases;

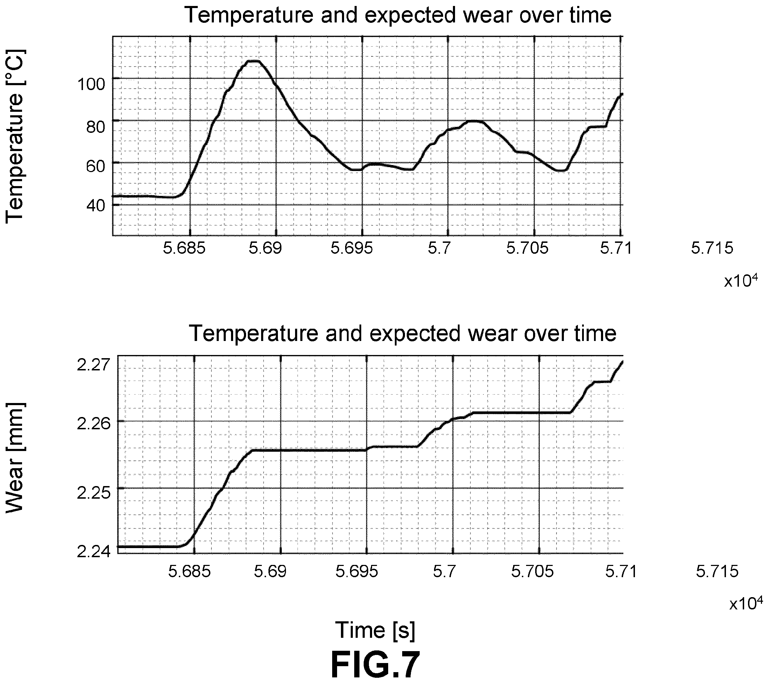

Figure 7 presents two graphs showing the relationship between the detected temperature trend and the corresponding wear estimate;
Figure 8 shows a comparison between the experimental measures actually performed and wear estimate according to the method described in this invention.

DESCRIPTION OF THE METHOD

The present invention is intended to protect the wear estimate of a vehicle brake element using the sum of subsequent wear increases, as calculated by means of an estimation of the amount of heat transferred to said element, regardless of how said estimate of the amount of heat is obtained.

The purpose of the invention, therefore, is to estimate brake element wear by means of heat dynamics. The strategy of the method, according to the invention, is to estimate increases in wear over short time periods, then to add up the estimated increases to obtain the pad's actual thickness in real time.

Different system architectures may be implemented depending on which capture strategy and auxiliary sensors are used, including but not limited to the following descriptions.

Essentially, the data capture may be:

- time-based: temperatures and data from auxiliary sensors are acquired at short time intervals;
- preferably, based on activation and time: temperatures and data from the auxiliary sensors are acquired from when the brake pedal is activated at time t1 up to a predetermined time t2 after release of the pedal and/or braking; advantageously, this solution reduces the amount of power required for the system.

Advantageously, according to the method of the present invention, all acquired measurements are used for estimating the corresponding wear increases with no need to select the analyzed events.

The estimation algorithm is compatible with any driving style: with a more aggressive driving style, the estimation of increase in wear is expected to be greater.

Measurements detected by auxiliary sensors, such as ambient temperature and other variable data, can be used to refine the heat dynamics models, thus improving the performance of the estimation algorithm.

Advantageously, the wear estimate is captured in real time.

Conveniently, each corner of the vehicle can be equipped with one or two pads with sensors; advantageously, wear may be estimated for each pad or as a function of the thickness of the pads of the same corner.

Each corner of the vehicle can be equipped with pads with sensors.

The wear estimate can be captured by a central vehicle processing unit and/or by individual dedicated control units at each individual corner.

PRINCIPLE OF THE METHOD

The increase in wear $\Delta w$ of the friction material between two subsequent temperature captures is proportional to the friction work $Wfr$ implemented by the braking.

The friction work $Wfr$ is proportional to the amount of heat transferred to the brake pad.

The heat transferred to the brake pad is partly dissipated as $\delta Qout$ and partly causes, as $\delta Qin$, an increase in temperature $\Delta T$.

$\delta Qin$ can be estimated from temperature increment measurements $\Delta T$, which may be supplemented with readings of other variables.

The successive estimated wear increments $\Delta w$ are added together to obtain total wear $w$.

Schematically:

$$\Delta w \propto W_{fr} \propto \delta Q_{in}(\Delta T, \ldots)$$

DETAILED DESCRIPTION OF THE COMPONENTS OF SOME EMBODIMENTS

The following detailed description refers to the attached drawings, which form a part thereof.

In the drawings, similar reference numbers typically identify similar components, unless otherwise dictated by the context.

The forms of illustrative implementation described in the detailed description and in the drawings are not understood to be limitative.

Other embodiments may be utilized and other modifications may be made without departing from the scope of the subject matter presented herein.

Aspects of the present explanation, as described generally herein and illustrated in the figures, may be rearranged, replaced, combined, separated and designed in a wide variety of different configurations, all explicitly contemplated and present in the present invention.

In the descriptive text that follows, element 20 may be referred to as "wear-able block of friction material" or "brake pad" indiscriminately; the term "brake pad temperature" may be conventionally used as "back-plate temperature".

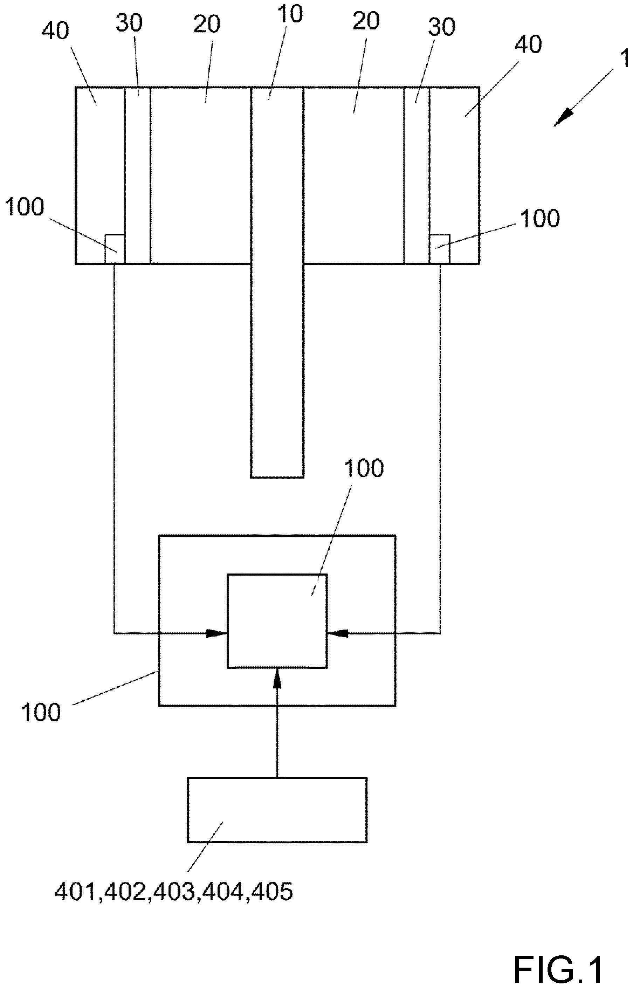

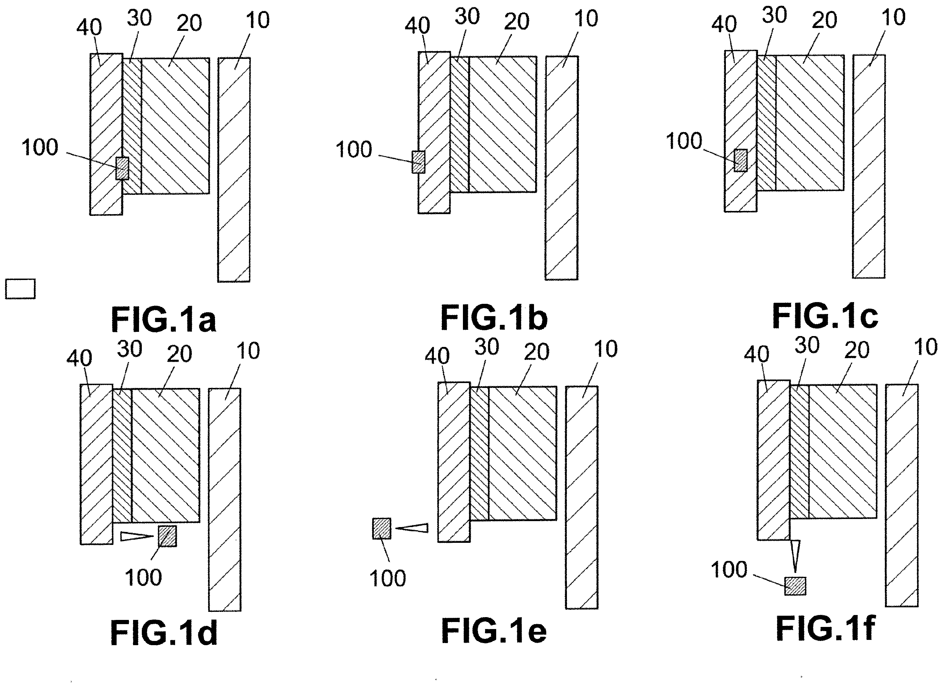

Fig. 1 provides a schematic illustration of a corner 1 of a vehicle equipped with a braking element according to the present invention.

At least a braking element of the vehicle, consisting of a wear-able block of friction material 20, a back support plate 40 and a temperature sensor 100 configured and positioned to capture the temperature of the back support plate 40.

The temperature sensor 100 is typically a contact temperature sensor integrated into the back support plate 40 or a non-contact temperature sensor.

The temperature sensor 100 may be configured and positioned to sense the temperature of the surface of the back support plate 40 or the average temperature of the back support plate 40. Some of the possible positions of the temperature sensor 100 are shown in Figures 1 to 1f.

For example, the temperature sensor 100, if of the contact type, may be positioned flush or overhanging a surface of the back support plate 40 adjacent to the wear-able block of friction material 20 (Figs. 1, 1a) or flush or overhanging on a surface of the back support plate 40 opposite the wear-able block of friction material 2 (Fig. 1b), or may be integrated within the back support plate 40 (Fig. 1c).

The temperature sensor 100, on the other hand, if of the contact type, may be positioned on the side of the surface of the back support plate 40 adjacent to the wear-able block of friction material 20 (Figs. 1d) or on the side of a surface of the back support plate 40 opposite the wear-able block of friction material 2 (Fig. 1e), or lateral to the back support plate 40 (Fig. 1f).

The temperature sensor 100 may be a separate component or may be silk-screened directly on the metal back support plate; different patterns may be made by combining different types of sensors; multiple temperature sensors may be used in the same embodiment to obtain distributed temperature monitoring.

The braking element may be a braking pad that cooperates with a disc 10, as shown by way of example in Figure 1, or a jaw that cooperates with a drum, not shown in the Figures.

As shown schematically in Figure 1, the corner 1 of the vehicle is provided with a brake pad made up of an optional back layer 30 between the wear-able block of friction material 20 and the back support plate 40.

Advantageously, the temperature sensor 100 may be incorporated in the brake pad external to the disc 10 or on the brake pad internal to the disc 10, and, advantageously, in the external braking pad and the internal braking pad.

An electronic processing unit (EPU) 200 is connected to the temperature sensor 100.

Suitably and advantageously, the electronic processing unit (EPU) 200 is connected to and receives input signals from a plurality of auxiliary sensors, typically one or more accelerometers 401, one or more ambient temperature detectors 403, one or more motion detectors 404 provided on board the vehicle.

Furthermore, at least one or more smart force sensors 402 embedded in the brake pad and a switch on the brake pedal 405 may be provided and connected to the electronic processing unit 200.

Conveniently, an algorithm 300 according to the invention of the present method oversees the data collection, processing and output of the electronic processing unit (EPU) 200 in relation to the estimation of the thickness 600 of the wear-able block of friction material 20.

The method of estimating wear in a vehicle brake element according to the present invention, therefore, involves the temperature sensors 100 acquiring the temperature detected for the back support plate 40, generating the temperature signals and transmitting the temperature signals to the electronic processing unit 200, which provides an estimate of the thickness of the wear-able block of friction material 20 by duly processing the temperature signals using the algorithm 300.

Advantageously, seasonal adjustment is performed using the measured ambient temperature to increase the performance and resolution of the algorithm.

Advantageously, the wear of the brake pad 20 can be estimated in real time.

Advantageously, the corner of the vehicle 1 may be equipped with one or two temperature sensors 100, wherein the wear of the brake pad 20 may be estimated for each brake pad 20 or as an average value of the brake pads 20 of that corner of the vehicle 1.

Advantageously, each corner of the vehicle 1 may be equipped with temperature sensors 100.

Advantageously, the calculation of the wear of the brake pad 20 may be performed by one central electronic processing unit 200 or by individual electronic processing units 200, each dedicated to a different corner of the vehicle 1.

SYSTEM ARCHITECTURES

The following description illustrates three different but not limitative system architectures, each of which can be implemented based on the chosen data acquisition strategy and auxiliary sensors; each architecture can be used with any one of the algorithm strategies.

**Time-based data capture architecture.**

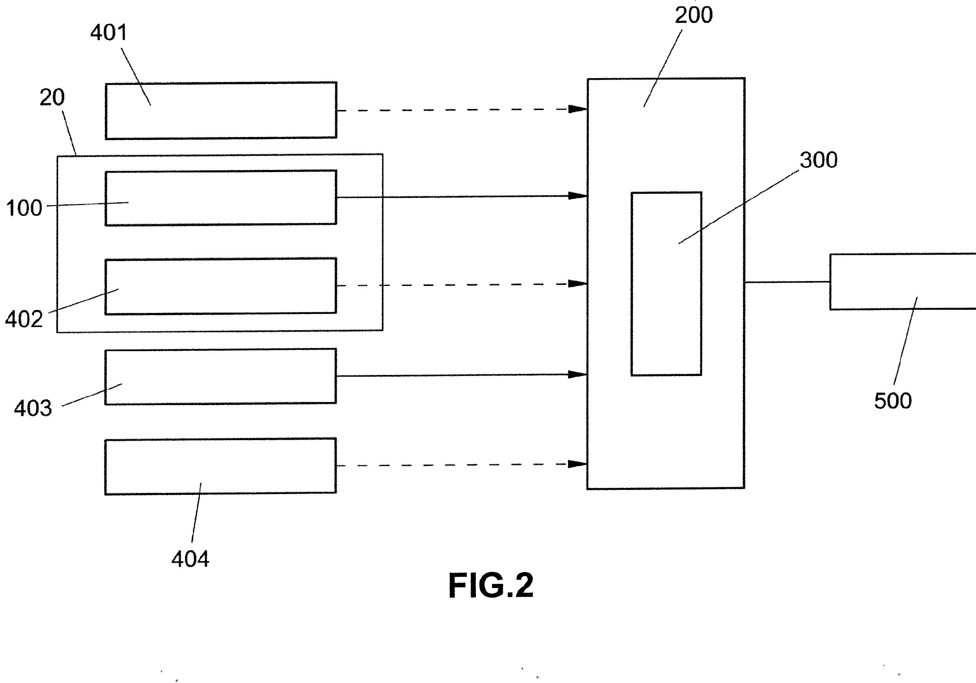

Figure 2 schematically shows a system architecture of the time-based data acquisition method. All sensor data acquisitions are performed at time points defined by the electronic processing unit 200.

Typically, the interval between data collection time points is between 1 second and 60 seconds, preferably 30 seconds.

Different sensors may be sampled at different sampling rates.

The architecture includes at least temperature sensor 100, accelerometers 401, ambient temperature sensors 403, smart force sensors 402 of the pad, motion sensors 404, and an electronic processing unit 200 with the algorithm 300.

Smart force sensors 402 include at least one shear force sensor and/or a pressure force sensor. Accelerometers 401, force sensors 402, and motion sensors 404 may or may not be used for the wear estimation.

Accelerometers 401, force sensors 402, and motion sensors 404 may be used to quantify dissipative terms or provide alternative methods for calculating braking force work.

Ambient temperature sensors 403 are used for seasonal adjustments of the data collected by temperature sensors 100.

The accelerometers 401 are connected to the electronic processing unit 200, wherein the accelerometer 401 acquires vehicle acceleration as defined by the electronic processing unit 200 and generates a vehicle acceleration signal that is transmitted to the electronic processing unit 200.

The smart plate force sensors 402 are connected to the electronic processing unit 200, wherein the smart pad force sensors 402 acquire at least one force as defined by the electronic processing unit 200 and generate a force signal that is transmitted to the electronic processing unit 200.

The vehicle motion sensor 404 is connected to the electronic processing unit 200, wherein the vehicle motion sensor 404 acquires vehicle movement as defined by the electronic processing unit 200 and generates a motion signal that is transmitted to the electronic processing unit 200.

The collected data is processed by the electronic processing unit 200 through the algorithm 300; the signals of accelerometers 401, the smart force sensors of the pad 402, and the vehicle motion sensors 404 are processed to offset and adjust the wear estimate and/or to select and/or to detect a significant event, i.e. a significant braking event.

Finally, an estimate of wear increase 500 of the brake pad 20 is provided.

**Activation-based data acquisition architecture: first example.**

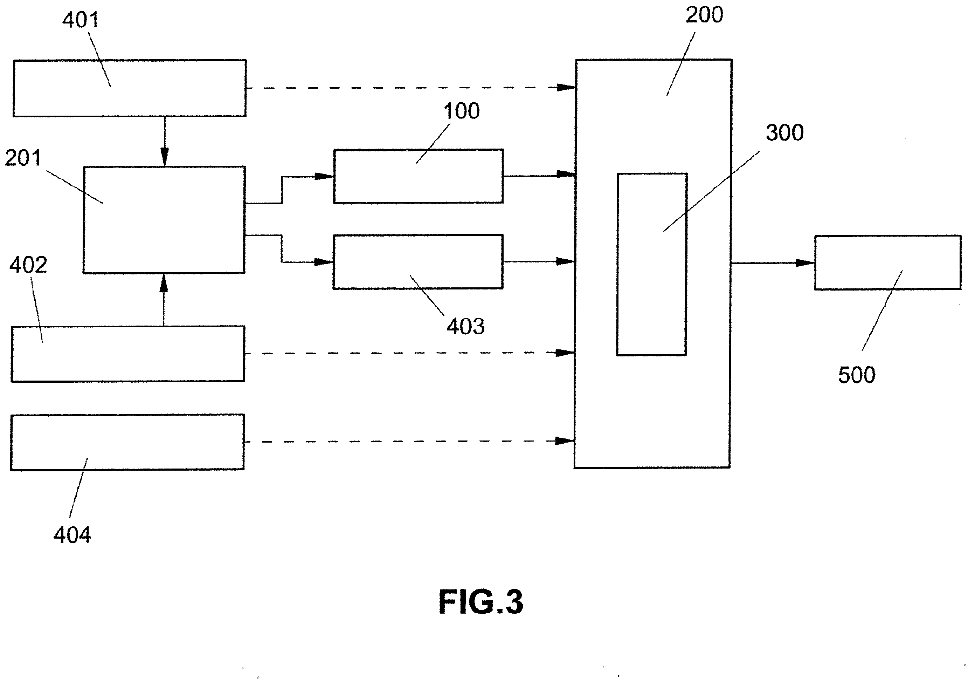

Figure 3 schematically shows a system architecture for the method with smart brake pad sensors and activation-based data capture.

In an activation-based data acquisition strategy, the temperature data acquisition (of the pad and/or braking system and/or environment) is performed only when a significant event occurs, i.e. a significant braking event.

The architecture includes at least temperature sensor 100, accelerometers 401, ambient temperature sensors 403, smart force sensors of the pad 402, motion sensors 404, a unit for acquisition strategy 201 and an electronic processing unit 200 with the algorithm 300.

A unit for acquisition strategy 201 can be used for selecting significant braking events from among all braking events detected by the accelerometers 401 and the smart force sensors of the pad 402.

Accelerometers 401 and/or force sensors 402 may or may not be used for the wear estimation.

Accelerometers 401 and/or force sensors 402 and/or and motion sensors 404 and/or ambient temperature sensors 403 may be used to quantify dissipative terms or provide alternative methods for calculating braking force work.

Ambient temperature sensors 403 are used for making seasonal adjustments to the data collected by temperature sensors 100; other known instruments that can detect environmental changes may be used for seasonal adaptation purposes.

The collected data is processed by the electronic processing unit 200 through the algorithm 300 and an estimate of the wear increase 500 of the brake pad 20 is provided.

**Activation-based data acquisition architecture: second example.**

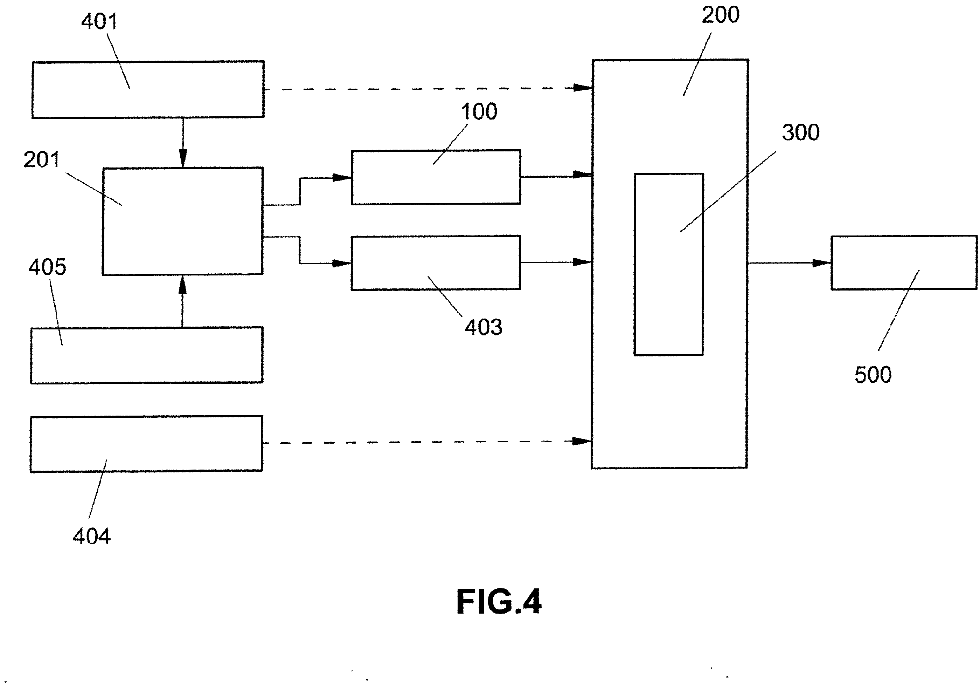

Figure 4 schematically shows a system architecture for the method in which the brake pads are equipped with smart force sensors and where the data capture is based on activation.

The architecture includes at least the temperature sensor 100, accelerometers 401, ambient temperature sensors 403, a brake pedal switch or a vehicle information network 405, motion sensors 404, a unit for acquisition strategy 201, and an electronic processing unit 200 with the algorithm 300.

In a data-acquisition strategy based on activation, the data acquisition from the temperature sensors 100 and the data acquisition from ambient temperature sensors 403 are performed only when a significant braking event occurs.

A unit for acquisition strategy 201 can be used for selecting significant braking events from among all braking events detected by the accelerometers 401 and the brake pedal switch 405.

In an activation-based data acquisition strategy, the temperature data acquisition (from the pad and/or the braking system and/or the environment) is performed only when a significant event occurs, i.e. a significant braking event.

Accelerometers 401 and/or motion sensors 404 may or may not be used for the wear estimation.

Accelerometers 401 and/or the brake pedal switch and/or the vehicle information network 405 may be used to quantify dissipative terms or provide alternative methods for calculating braking force work.

Accelerometers 401 and/or motion sensors 404 and/or ambient temperature sensors 403 may be used for the selection of significant braking events.

Ambient temperature sensors 403 are used for making seasonal adjustments to the data collected by temperature sensors 100; other known instruments that can detect environmental changes may be used for seasonal adaptation purposes.

The collected data is processed by the electronic processing unit 200 through the algorithm 300 and an estimate of the wear increase 500 of the brake pad 20 is provided.

ALGORITHM DIAGRAM

The collected signals are processed for possible spikes and measurement errors to reduce their impact on wear estimation.

The increase in the temperature $\Delta T$ of the brake pad between two subsequent time points t1 and t2 is calculated.

The amount of heat dissipated $\delta Qout$ is calculated, preferably but not exclusively, as a function of each piece of data detected and processed by the available sensors.

Other phenomena that may contribute to the dynamics of the heat are considered, preferably but not exclusively and depending on what sensors are available.

The temperature increase $\Delta T$, the dissipated heat $\delta Qout$, and any other phenomena considered are processed and combined to generate an estimate of the amount of heat transferred to the brake pad $\delta Qin$.

The estimate of the amount of heat transferred to the brake pad $\delta Qin$ is converted into the estimate of the increase in wear $\Delta w$ of the friction material.

The new increase in wear $\Delta w$ is subtracted from the known and/or previously calculated pad thickness to obtain its actual thickness in real time.

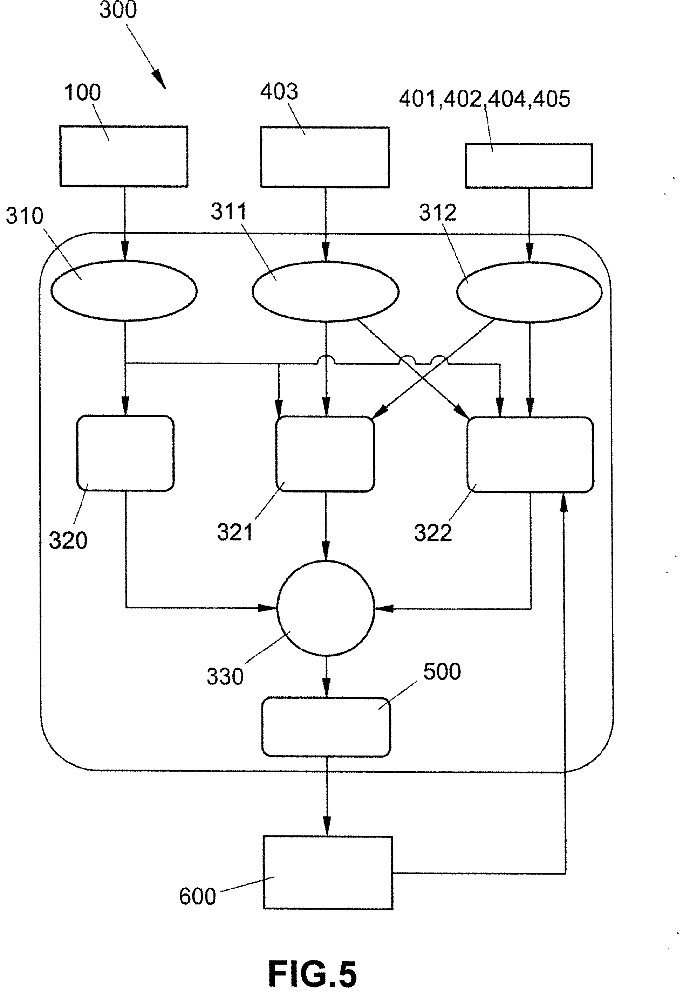

Figure 5 schematically illustrates the flow diagram of the algorithm 300 in the electronic processing unit 200.

The data captured by the temperature sensor 100 is processed by signal process section 310; the ambient temperature signals transmitted by ambient temperature sensors 403 are processed by signal process section 311, the signals captured by auxiliary sensors 401, 402, 404 and 405 are processed by signal process section 312.

The temperature signal thus processed by section 310 is transferred to the calculation sections 320, which estimate the increase in temperature $\Delta T$; the signals processed by the process sections 310, 311 and 312 flow both into calculation section 321, which determines the amount of heat dissipated $\delta Qout$, and into calculation section 322, which manages and processes the data detected for boundary phenomena.

The data processed by calculation sections 320, 321 and 322 flow into the complex calculation section 330, which determines the estimation of the amount of heat transferred to the brake pad $\delta Qin$, and sequentially the increase in wear $\Delta w$ 500 of the friction material.

The thickness estimate 600 is then calculated and provided in real time by subtracting the wear increase $\Delta w$ *500* from the known thickness of the pad.

IMPLEMENTATION STRATEGIES

Here are some implementation schemes - exemplary but not exhaustive - of the wear estimation method for a vehicle brake element according to the present invention.

**Implementation, general case 1**

This first scheme may be considered the most typical and general scheme: this scheme includes all others (whether described here or not) as more specific cases.

The presence of auxiliary sensors is considered, even if they are not essential: their measurements, when available, are processed by the algorithm 300 and used to estimate heat dissipation and to consider other boundary phenomena.

We define $\Delta w$ as the estimate of the calculated wear increase for the difference $\Delta T$ of the temperature $T$ between the two acquisitions after the next two time points t1 and t2, *w old* as the wear estimate previously calculated at t1; the new wear estimate *w new* is the sum of *w old* and $\Delta w$.

For each new pad temperature acquisition *Tnew* and ambient temperature acquisition *Tamb:*

- the $\Delta T$ *is calculated* as the difference between *Tnew* at time point t2 and the previous *Told* at time point t1 ;
- the amount of heat dissipated $\delta Qout^{(\alpha)}(T, Tamb, ....)$ is calculated, where $(\alpha)$ is a set of parameters to be fine-tuned by comparing them with the detected experimental parameters and the points represent any further measurement detectable by the auxiliary sensors;
- the amount of heat transferred $\delta Qin$ is calculated based on a plurality of contributions, typically a first contribution from a calculation of the temperature difference $\Delta T$ acquired between acquisition points t1 and t2, a second contribution $\delta Qout$ from the calculation of the amount of heat dissipated, and to the extent possible, other contributions from other boundary phenomena: $\delta Qin = f^{(\beta)}(\Delta T, \delta Qout, w\, old, ....)$ where $(\beta)$ is another set of modulation parameters that make it consistent with previously acquired experimental data;
- the wear increase 500 is calculated as $\Delta w = \gamma \cdot \delta Qin$;
- the wear value $w$ is updated as *w new = w old + $\Delta w$;*
- the thickness 600 of the pad is updated by subtracting the value of the wear increase 500 from the known and/or calculated thickness;
- the parameters in $\alpha, \beta, \gamma$ *are* processed to maximize correspondence with the detected experimental data.

**Implementation, specific case 2**

This second scheme may be considered a specific instance of the general scheme described above.

In this case, the only effects that contribute to the heat transfer estimate $\delta Qin$ are a first contribution from a calculation of the temperature difference $\Delta T$ acquired between acquisition points t1 and t2 and a second contribution $\delta Qout$ from the calculation of the amount of heat dissipated; the presence of auxiliary sensors is considered but is not necessary.

For each pad temperature acquisition *Tnew* and ambient temperature acquisition *Tamb:*

- $\Delta T$ is calculated as the difference between *Tnew* and the previous *Told;*
- the amount of heat dissipated $\delta Qout^{(\alpha)}(T, Tamb, ....)$ is calculated, where $(\alpha)$ is a set of parameters to be fine-tuned by comparing them with the detected experimental parameters and the points represent any further measurement detectable by the auxiliary sensors;
- the amount of heat transferred is calculated $\delta Qin = (\beta_1 \Delta T + \delta Qout) +$, which identifies the amount $(\beta_1 \Delta T + \delta Qout)$ when it is positive, or otherwise set to zero, where $(\beta1)$ is a set of modulation parameters consistent with previously acquired experimental data;
- the increase in wear is calculated as $\Delta w = \gamma \cdot \delta Qin$;
- the wear value $w$ is updated as *w new = w old + $\Delta w$;*
- the thickness 600 of the pad is updated by subtracting the value of the wear increase 500 from the known and/or calculated thickness;
- the parameters in $\alpha, \beta1, \gamma$ are processed to maximize correspondence with the detected experimental data.

**Implementation, specific case 3**

This third scheme may be considered a specific instance of the general scheme described above. In this case, it is assumed that the pad temperature detector is the only sensor available and that only the first contribution from a calculation of the temperature difference $\Delta T$ acquired between the acquisition points t1 and t2 contributes fully to the amount of heat transferred to the brake pad $\delta Qin$, without any dissipation.

For each pad temperature acquisition *Tnew:*

- $\Delta T$ is calculated as the difference between *Tnew* and the previous *Told;*
- the amount of heat transferred $\delta Qin = (\beta_1 \Delta T)+$ is calculated, where $(\beta 1)$ is a set of modulation parameters consistent with previously acquired experimental data;
- the increase in wear is calculated as $\Delta w = \gamma \cdot \delta Qin;$
- the wear value *w* is updated as *w new = w old + $\Delta w$;*
- the thickness 600 of the pad is updated by subtracting the value of the wear increase 500 from the known and/or calculated thickness;
- the parameters in $\beta 1, \gamma$ *are* processed to maximize correspondence with the detected experimental data.

FROM DISCRETE TIME TO CONTINUOUS TIME WEAR MODEL

As mentioned, the wear increment of the friction material between two successive temperature acquisitions is proportional to the frictional work performed by braking.

The frictional work is proportional to the quantity of heat $\delta Q_{in}$ transferred to the brake pad.

The heat $\delta Q_{in}$ transferred to the brake pad is partially dissipated and partially causes an increase in the temperature of the brake pad.

It is possible to estimate $\delta Q_{in}$ by measuring the temperature of the brake pad, possibly supplemented by the reading of other variables.

In the discussion that follows:

D = initial thickness of the brake pad
A = area of the brake pad that comes into contact with the brake disc
i = i-th acquisition of the temperature measurement acquired at time $t_i$, where i = 1, 2, 3, .....N
$x_i$ = thickness corresponding to the i-th acquisition of temperature measurement.
$x_{i-1}$ = thickness corresponding to the i-1-th acquisition of temperature measurement.
$\Delta w_i = x_i - x_{i+1} = -\Delta x_i$ = wear increment between acquisition i and acquisition i-1
$\Delta T_i$ = positive variation of temperature between acquisition i and acquisition i-1
$(\Delta T_i)^+ = \max(0, \Delta T_i)$
$\delta Q_{in,i}$ = heat transferred to the brake pad between acquisition i and acquisition i-1
$\gamma$ = constant, experimentally determined
$\beta$ = set of modulation parameters

In general, it is true that:

$$\Delta x_i = -\Delta w_i = -\gamma \, \delta Q_{in,i} = -\gamma f^{(\beta)} (\Delta T_i, x_{i-1}, \ldots.)$$

The increments are then summed up to calculate the thickness after n time steps:

$$x_n = x_0 - \gamma \sum_{i=1}^{n} f^{(\beta)} (\Delta T_i, x_{i-1}, \ldots.)$$

In one of the possible implementations of the wear model, we have that:

$$f^{(\beta)} ((\Delta T_i)^+, x_{i-1}, \ldots.) = C_p \rho A \, x_{i-1} (\Delta T_i)^+$$

where

$C_p$ = specific heat of brake pad

$\rho$ = density of brake pad

The formula to calculate the wear increment according to the wear model adopted is:

$$\Delta x_i = -\Delta w_i = -\gamma\, x_{i-1}\, (\Delta T_i)^+$$

where $\gamma$ is a parameter calculated with a statistical method that encompasses all the constants.

The aforementioned wear model considers temperature and wear increments at discrete time intervals and allows for the calculation of the estimated current thickness of the wearable block by subtracting from the initial thickness wear increments, estimated on the basis of the thermal energy exchanged by the brake pad at a discrete time interval.

This discrete-time wear model is congruent with the fact that the acquisition of temperature signals and other signals (ambient temperature, force, etc.) take place through sampling. Physically, however, these wear increments in fact take place with a continuous flow over time, and advantageously, the invention also provides a new wear model that takes this into account. The continuous-time wear model arises as a limit of the discrete-time wear model for acquisition intervals that tend toward zero and is formulated as a differential equation that connects the infinitesimal wear increment to the various quantities available to the model (positive increase in temperature, thickness, etc.).

Let us therefore now consider the case when temperature and wear increments are taken over infinitesimally short times dt.

In this case infinitesimal increments $\Delta x_i$ and $\Delta T_i$ are substituted by the time derivatives dx(t)/dt and dT(t)/dt.

The general case is:

$$dx(t)/dt = -\gamma\, g^{(\beta)}\, (dT(t)/dt,\, x(t),\, \ldots.)$$

In the simplest example above, the differential equation looks like the following.

$$dx(t)/dt = -\gamma x(t)\, (dT(t)/dt)^+$$

where $(dT(t)/dt)^+ = \max(0,\, dT(t)/dt)$

The solution of this differential equation may be performed numerically in most cases (with Euler discretization, or by higher order methods), or analytically, for particular choices of the function $g^{(\beta)}$.

If solved numerically by the Euler method, this differential equation brings back to the discrete time wear model.

In particular cases the differential equation

$$dx(t)/dt = -\gamma\, g^{(\beta)}\, (dT(t)/dt,\, x(t),\, \ldots.)$$

can be solved analytically.

For example, for the simple example above where the differential equation is

$$dx(t)/dt = -\gamma x(t)\, (dT(t)/dt)^+$$

there is the following explicit solution:

$$x(t) = De^a$$

where $a = -\gamma \int_0^t (dT(t)/dt)^+ ds$

Note that since the acquisition of temperatures always happens discretely, the [integral] above needs to be calculated from discrete values.

Advantageously, then, the invention provides a modeling of the relationship between the infinitesimal wear increments and the other quantities available in terms of a differential equation.

Advantageously in this new formulation, sometimes the wear calculation can be made even without directly summing the infinitesimal wear increments.

Advantageously, as stated, unlike the wear model that considers temperature and wear increments at discrete time intervals, the wear model that considers temperature and wear increments at infinitesimal time intervals allows for the calculation of the estimate of wear without the need to know the value of the wear increments.

EXPERIMENTAL RESULTS

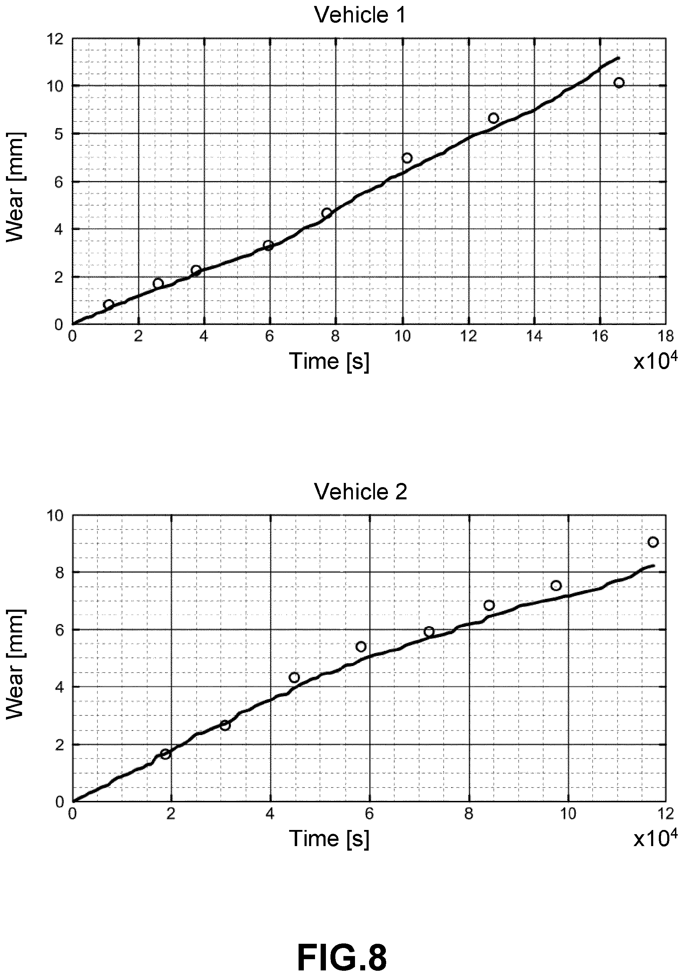

The graphs in Figure 8 show the results of a specific implementation, general case 1, as described above.

The algorithm was developed with long-term tests where two vehicles were driven until the pads were completely consumed while repeating various physical measures of partial wear, as represented by the circles on the graphs; the solid line represents what was returned by the algorithm, which was subsequently fine-tuned on the same data.

The margins of error represented by the RMSE (root mean square error) for the first vehicle is 0.29mm and for the second vehicle is 0.42mm; the MAE (mean absolute error) for the first vehicle is 0.56mm and for the second vehicle is 0.81mm.

In effect, it was found that the method according to the invention is particularly advantageous for providing a reliable and safe real-time estimate of wear in a vehicle brake element.

Changes and variations to the all the above are possible, naturally; the method for estimating wear in a vehicle brake element, conceived in this way, is subject to numerous modifications and variations, all within the scope of the inventive concept, as depicted in the claims; furthermore, all details can be replaced with other technically-equivalent elements.

In practice, any kind of materials and systems may be used, according to the needs and the state of the art.

**Claims**

1. Method for estimating wear in the braking element of a vehicle that includes at least a braking disc (10), a wear-able block of friction material (20) and a back support plate (40) of said block of friction material (20), at least one temperature sensor (100) configured and positioned to sense the temperature of said back support plate (40), and one electronic processing unit (200) connected to said temperature sensor (100), including the actions of:

   - capturing, over time, a plurality of temperature values from said at least one temperature sensor (100);
   - processing an estimate of the thickness (600) of said wear-able block of friction material (20) by processing said acquired temperature values,
   wherein said estimate of the thickness (600) of said wear-able block of friction material (20) is performed by subsequently subtracting a plurality of wear increases (500) from the thickness of said block (20), where each increase in wear (500) is calculated between capture points (t1 and t2) of a corresponding pair of temporally consecutive temperature values, where each increase in wear (500) is calculated by calculating an amount of heat transferred to said wear-able block of friction material (20) between said capture points, wherein at least a first contribution to said amount of heat transferred for each increase in wear (500) is inferred from a calculation of the acquired temperature difference between said capture points (t1 and t2), **characterized in that**,
   at least a second contribution to said amount of heat transferred for each increase in wear (500) is inferred from a calculation of the heat dissipated by said brake element between said capture points (t1 and t2), and wherein in the calculation of said amount of heat transferred, each contribution to said amount of heat transferred is modulated with parameters to make it consistent with previously acquired experimental data.

2. A method for estimating wear in a vehicle brake element according to the preceding claim, **characterized by** the fact that each increase in wear (500) is calculated upon each acquisition of said detected temperature of said back support plate (40).

3. A method for estimating wear in a vehicle brake element according to any preceding claim, **characterized by** the fact that said acquisition of the sensed temperature of said back support plate (40) is activated with each activation of braking on said braking disc (10) at time t1 and until a predetermined time t2 after release of the braking.

4. A method for estimating wear in a vehicle brake element according to any preceding claim, **characterized by** the fact that said estimation of the thickness (600) of said wear-able block of friction material (20) is performed in real time.

5. A method for estimating wear in a vehicle brake element according to any preceding claim, **characterized by** the fact that said temperature sensor (100) is a contact temperature sensor positioned flush or overlapping on a surface of the back support plate (40) adjacent to the wear-able block of friction material (20) or flush or overlapping on a surface of the back support plate (40) opposite the wear-able block of friction material (2), or is integrated into the back support plate (40).

6. A method for estimating wear in a vehicle brake element according to any of claims 1 to 4, **characterized by** the fact that said temperature sensor (100) is a no-contact temperature sensor positioned on the side of a surface of the back support plate (40) adjacent to the wear-able block of friction material (20) or on the side of a surface of the back support plate (40) opposite the wear-able block of friction material (2), or laterally to the back support plate (40).

7. A method for estimating wear in a vehicle brake element according to any preceding claim, **characterized by**: provision of an ambient temperature sensor (403) connected to said electronic processing unit (200), the acquisition of ambient temperature, the generation of an ambient temperature signal for said ambient temperature, the transmission of said ambient temperature signal to said electronic processing unit (200), where said electronic processing unit (200) processes said ambient temperature signal to adjust said wear increase estimate (500).

8. A method for estimating wear in a vehicle brake element according to any preceding claim, **characterized by**: the provision of a vehicle accelerometer (401) connected to said electronic processing unit (200), the acquisition of vehicle acceleration, the generation of an acceleration signal for said vehicle acceleration, the transmission of said vehicle acceleration signals to said electronic processing unit (200), where said electronic processing unit (200) processes said acceleration signal to adjust said wear increase estimate (500).

9. A method for estimating wear in a vehicle brake element according to any preceding claim, **characterized by**: the provision of a vehicle motion detector (404) connected to said electronic processing unit (200), the acquisition of vehicle motion, the generation of a motion signal for said vehicle motion, the transmission of said vehicle motion signals to said electronic processing unit (200), where said electronic processing unit (200) processes said motion signals to adjust said wear increase estimate (500).

10. A vehicle brake element including a wear-able block of friction material (20), a back support plate (40) of said block of friction material (20), a temperature sensor (100) configured and positioned to detect the temperature of said back support plate (40) and an electronic processing unit (200) configured to carry out the wear estimation method for said element according to any of the preceding claims.

11. Method for estimating wear in the braking element of a vehicle that includes at least a braking disc (10), a wearable block of friction material (20) and a back support plate (40) of said block of friction material (20), at least one temperature sensor (100) configured and positioned to sense the temperature of said back support plate (40), and one electronic processing unit (200) connected to said temperature sensor (100), including the actions of:

- acquisition of a temporal evolution of the temperature by said temperature sensor (100); the method being **characterized in that** it includes the action:
- creation of a wear model in which a relationship between said wear and said temporal evolution of temperature is modeled with a differential equation, where the wear estimate is given by an analytical or numerical solution of said differential equation.

12. Method for estimating wear according to claim 11, **characterized by** the fact that said differential equation is:

$$dx(t)/dt = -\gamma \, g^{(\beta)} \, (dT(t)/dt, x(t), ....)$$

where

x(t) = function that expresses the trend over time (t) of the thickness of the braking element;
T(t) = function that expresses the trend over time (t) of the temperature of the braking element;
(dT(t)/dt) = function derived over the time of T(t) $^{+}$
dx(t)/dt = function derived over the time of x(t);
$\gamma$ = parameter
$\beta$ = set of modulation parameters

**Patentansprüche**

1. Verfahren zur Schätzung des Verschleißes im Bremselement eines Fahrzeugs, das mindestens eine Bremsscheibe (10), einen abnutzbaren Block aus Reibmaterial (20) und eine Rückstützplatte (40) des genannten Reibmaterialblocks (20) umfasst, mindestens einen Temperatursensor (100), der konfiguriert und positioniert ist, um die Temperatur der genannten Rückstützplatte (40) zu messen, und eine elektronische Verarbeitungseinheit (200), die mit dem Temperatursensor (100) verbunden ist, einschließlich der Schritte:

- Über die Zeit hinweg eine Vielzahl von Temperaturwerten von dem mindestens einen Temperatursensor (100) zu erfassen;
- eine Schätzung der Dicke (600) des genannten abnutzbaren Blocks aus Reibmaterial (20) zu verarbeiten, indem die erfassten Temperaturwerte verarbeitet werden, wobei die Schätzung der Dicke (600) des abnutzbaren Blocks aus Reibmaterial (20) durch sukzessives Subtrahieren einer Vielzahl von Verschleißsteigerungen (500) von der Dicke des Blocks (20) vorgenommen wird, wobei jede Verschleißsteigerung (500) zwischen den Erfassungszeitpunkten (t1 und t2) eines entsprechenden Paars zeitlich aufeinanderfolgender Temperaturwerte berechnet wird, wobei jede Verschleißsteigerung (500) durch Berechnung einer Wärmeübertragung auf den abnutzbaren Block aus Reibmaterial (20) zwischen den Erfassungszeitpunkten berechnet wird, wobei mindestens ein erster Beitrag zu dieser Wärmeübertragung für jede Verschleißsteigerung (500) aus einer Berechnung der erfassten Temperaturdifferenz zwischen den Erfassungszeitpunkten (t1 und t2) abgeleitet wird, **dadurch gekennzeichnet, dass** mindestens ein zweiter Beitrag zu dieser Wärmeübertragung für jede Verschleißsteigerung (500) aus einer Berechnung der Wärme, die vom Bremselement zwischen den Erfassungszeitpunkten (t1 und t2) abgegeben wird, abgeleitet wird, und wobei bei der Berechnung der Wärmeübertragung jeder Beitrag zu dieser Wärmeübertragung mit Parametern moduliert wird, um ihn mit zuvor erfassten experimentellen Daten in Einklang zu bringen.

2. Verfahren zur Schätzung des Verschleißes in einem Fahrzeugbremselement gemäß dem vorhergehenden Anspruch, **dadurch gekennzeichnet, dass** jede Verschleißsteigerung (500) bei jeder Erfassung der gemessenen Temperatur der Rückstützplatte (40) berechnet wird.

3. Verfahren zur Schätzung des Verschleißes in einem Fahrzeugbremselement gemäß einem der vorhergehenden Ansprüche, **dadurch gekennzeichnet, dass** die Erfassung der gemessenen Temperatur der Rückstützplatte (40) bei jeder Aktivierung des Bremsvorgangs auf der Bremsscheibe (10) zu einem Zeitpunkt t1 und bis zu einem vorbestimmten Zeitpunkt t2 nach Freigabe der Bremsung aktiviert wird.

4. Verfahren zur Schätzung des Verschleißes in einem Fahrzeugbremselement gemäß einem der vorhergehenden Ansprüche, **dadurch gekennzeichnet, dass** die Schätzung der Dicke (600) des abnutzbaren Blocks aus Reibmaterial (20) in Echtzeit durchgeführt wird.

5. Verfahren zur Schätzung des Verschleißes in einem Fahrzeugbremselement gemäß einem der vorhergehenden Ansprüche, **dadurch gekennzeichnet, dass** der Temperatursensor (100) ein Kontakt-Temperatursensor ist, der bündig oder überlappend auf einer Oberfläche der Rückstützplatte (40) angrenzend zum abnutzbaren Block aus Reibmaterial (20) oder bündig oder überlappend auf einer Oberfläche der Rückstützplatte (40) gegenüber dem abnutzbaren Block aus Reibmaterial (20) positioniert ist, oder in die Rückstützplatte (40) integriert ist.

6. Verfahren zur Schätzung des Verschleißes in einem Fahrzeugbremselement gemäß einem der Ansprüche 1 bis 4, **dadurch gekennzeichnet, dass** der Temperatursensor (100) ein Kontaktloser-Temperatursensor ist, der an der Seite einer Oberfläche der Rückstützplatte (40) angrenzend zum abnutzbaren Block aus Reibmaterial (20) oder an der Seite einer Oberfläche der Rückstützplatte (40) gegenüber dem abnutzbaren Block aus Reibmaterial (20) positioniert ist, oder seitlich zur Rückstützplatte (40).

7. Verfahren zur Schätzung des Verschleißes in einem Fahrzeugbremselement gemäß einem der vorhergehenden Ansprüche, **dadurch gekennzeichnet, dass** ein Umweltsensor (403) angeschlossen an die elektronische Verarbeitungseinheit (200) bereitgestellt wird, die Erfassung der Umwelttemperatur erfolgt, das Generieren eines Umwelttemperatursignals für die Umwelttemperatur, und die Übertragung des Umwelttemperatursignals an die elektronische Verarbeitungseinheit (200), wobei die elektronische Verarbeitungseinheit (200) das Umwelttemperatursignal verarbeitet, um die Schätzung der Verschleißsteigerung (500) anzupassen.

8. Verfahren zur Schätzung des Verschleißes in einem Fahrzeugbremselement gemäß einem der vorhergehenden Ansprüche, **dadurch gekennzeichnet, dass** ein Fahrzeugbeschleunigungssensor (401) angeschlossen an die elektronische Verarbeitungseinheit (200) bereitgestellt wird, die Fahrzeugbeschleunigung erfasst wird, das Generieren eines Beschleunigungssignals für die Fahrzeugbeschleunigung und die Übertragung des Beschleunigungssignals an die elektronische Verarbeitungseinheit (200), wobei die elektronische Verarbeitungseinheit (200) das Beschleunigungssignal verarbeitet, um die Schätzung der Verschleißsteigerung (500) anzupassen.

9. Verfahren zur Schätzung des Verschleißes in einem Fahrzeugbremselement gemäß einem der vorhergehenden Ansprüche, **dadurch gekennzeichnet, dass** ein Fahrzeugbewegungssensor (404) angeschlossen an die elektronische Verarbeitungseinheit (200) bereitgestellt wird, die Fahrzeugbewegung erfasst wird, das Generieren eines Bewegungssignals für die Fahrzeugbewegung und die Übertragung des Bewegungssignals an die elektronische Verarbeitungseinheit (200), wobei die elektronische Verarbeitungseinheit (200) das Bewegungssignal verarbeitet, um die Schätzung der Verschleißsteigerung (500) anzupassen.

10. Bremselement für ein Fahrzeug, das einen abnutzbaren Block aus Reibmaterial (20), eine Rückstützplatte (40) des Reibmaterialblocks (20), einen Temperatursensor (100) umfasst, der konfiguriert und positioniert ist, um die Temperatur der Rückstützplatte (40) zu messen, und eine elektronische Verarbeitungseinheit (200), die konfiguriert ist, das Verfahren zur Verschleißschätzung für das Element gemäß einem der vorhergehenden Ansprüche durchzuführen.

11. Verfahren zur Schätzung des Verschleißes im Bremselement eines Fahrzeugs, das mindestens eine Bremsscheibe (10), einen abnutzbaren Block aus Reibmaterial (20) und eine Rückstützplatte (40) des Reibmaterialblocks (20) umfasst, mindestens einen Temperatursensor (100), der konfiguriert und positioniert ist, um die Temperatur der Rückstützplatte (40) zu messen, und eine elektronische Verarbeitungseinheit (200), die mit dem Temperatursensor (100) verbunden ist, einschließlich der Schritte:

   - Erwerb einer zeitlichen Entwicklung der Temperatur durch den Temperatursensor (100); das Verfahren wird **dadurch gekennzeichnet, dass** es die folgende Aktion umfasst:
   - Erstellung eines Verschleißmodells, in dem eine Beziehung zwischen dem Verschleiß und der zeitlichen Entwicklung der Temperatur mit einer Differentialgleichung modelliert wird, wobei die Verschleißschätzung durch eine analytische oder numerische Lösung der Differentialgleichung gegeben wird.

12. Verfahren zur Schätzung des Verschleißes gemäß Anspruch 11, **dadurch gekennzeichnet, dass** die Differentialgleichung lautet:

$$dx(t)/dt = - \gamma \, g^{(\beta)} (dT(t)/dt, x(t), ....)$$

wobei

x(t) = Funktion, die den Verlauf über die Zeit (t) der Dicke des Bremselements ausdrückt;
T(t) = Funktion, die den Verlauf über die Zeit (t) der Temperatur des Bremselements ausdrückt;
(dT(t)/dt) = Funktion, die über die Zeit von T(t) abgeleitet ist;
dx(t)/dt = Funktion, die über die Zeit von x(t) abgeleitet ist;
$\gamma$ = Parameter;
$\beta$ = Satz von Modulationsparametern.

## Revendications

1. Méthode pour estimer l'usure de l'élément de freinage d'un véhicule comprenant au moins un disque de frein (10), un bloc d'usure en matériau de friction (20) et une plaque de support arrière (40) dudit bloc de matériau de friction (20), au moins un capteur de température (100) configuré et positionné pour détecter la température dudit plaque de support arrière (40), et une unité de traitement électronique (200) connectée au capteur de température (100), comprenant les étapes suivantes :

   - capturer, au fil du temps, une pluralité de valeurs de température provenant dudit au moins un capteur de température (100) ;
   - traiter une estimation de l'épaisseur (600) dudit bloc d'usure en matériau de friction (20) en traitant les valeurs de température acquises,

   où l'estimation de l'épaisseur (600) dudit bloc d'usure en matériau de friction (20) est effectuée en soustrayant successivement une pluralité d'augmentations de l'usure (500) de l'épaisseur dudit bloc (20), chaque augmentation de l'usure (500) étant calculée entre les points de capture (t1 et t2) d'une paire correspondante de valeurs de température consécutives dans le temps, chaque augmentation de l'usure (500) étant calculée en calculant une quantité de chaleur transférée audit bloc d'usure en matériau de friction (20) entre lesdits points de capture, où au moins une première contribution à cette quantité de chaleur transférée pour chaque augmentation de l'usure (500) est déduite du calcul de la différence de température acquise entre lesdits points de capture (t1 et t2), **caractérisé en ce que** au moins une seconde contribution à cette quantité de chaleur transférée pour chaque augmentation de l'usure (500) est déduite d'un calcul de la chaleur dissipée par ledit élément de freinage entre lesdits points de capture (t1 et t2), et où, dans le calcul de ladite quantité de chaleur transférée, chaque contribution à cette quantité de chaleur transférée est modulée avec des paramètres pour la rendre cohérente avec des données expérimentales acquises précédemment.

2.  Méthode pour estimer l'usure dans un élément de freinage de véhicule selon la revendication précédente, **caractérisée par le fait que** chaque augmentation de l'usure (500) est calculée à chaque acquisition de la température détectée de la plaque de support arrière (40).

3.  Méthode pour estimer l'usure dans un élément de freinage de véhicule selon l'une des revendications précédentes, **caractérisée par le fait que** l'acquisition de la température mesurée de la plaque de support arrière (40) est activée à chaque activation du freinage sur ledit disque de frein (10) au moment t1 et jusqu'à un temps prédéterminé t2 après la libération du freinage.

4.  Méthode pour estimer l'usure dans un élément de freinage de véhicule selon l'une des revendications précédentes, **caractérisée par le fait que** ladite estimation de l'épaisseur (600) dudit bloc d'usure en matériau de friction (20) est effectuée en temps réel.

5.  Méthode pour estimer l'usure dans un élément de freinage de véhicule selon l'une des revendications précédentes, **caractérisée par le fait que** ledit capteur de température (100) est un capteur de température de contact positionné à fleur ou se chevauchant sur une surface de la plaque de support arrière (40) adjacente au bloc d'usure en matériau de friction (20) ou à fleur ou se chevauchant sur une surface de la plaque de support arrière (40) opposée au bloc d'usure en matériau de friction (20), ou est intégré dans la plaque de support arrière (40).

6.  Méthode pour estimer l'usure dans un élément de freinage de véhicule selon l'une des revendications 1 à 4, **caractérisée par le fait que** ledit capteur de température (100) est un capteur de température sans contact positionné sur le côté d'une surface de la plaque de support arrière (40) adjacente au bloc d'usure en matériau de friction (20) ou sur le côté d'une surface de la plaque de support arrière (40) opposée au bloc d'usure en matériau de friction (20), ou latéralement à la plaque de support arrière (40).

7.  Méthode pour estimer l'usure dans un élément de freinage de véhicule selon l'une des revendications précédentes, **caractérisée par** : la fourniture d'un capteur de température ambiante (403) connecté à ladite unité de traitement électronique (200), l'acquisition de la température ambiante, la génération d'un signal de température ambiante pour la température ambiante, la transmission dudit signal de température ambiante à ladite unité de traitement électronique (200), où ladite unité de traitement électronique (200) traite ledit signal de température ambiante pour ajuster l'estimation de l'augmentation de l'usure (500).

8.  Méthode pour estimer l'usure dans un élément de freinage de véhicule selon l'une des revendications précédentes, **caractérisée par** : la fourniture d'un accéléromètre de véhicule (401) connecté à ladite unité de traitement électronique (200), l'acquisition de l'accélération du véhicule, la génération d'un signal d'accélération pour l'accélération du véhicule, la transmission dudit signal d'accélération à ladite unité de traitement électronique (200), où ladite unité de traitement électronique (200) traite ledit signal d'accélération pour ajuster l'estimation de l'augmentation de l'usure (500).

9.  Méthode pour estimer l'usure dans un élément de freinage de véhicule selon l'une des revendications précédentes, **caractérisée par** : la fourniture d'un détecteur de mouvement de véhicule (404) connecté à ladite unité de traitement électronique (200), l'acquisition du mouvement du véhicule, la génération d'un signal de mouvement pour le mouvement du véhicule, la transmission dudit signal de mouvement à ladite unité de traitement électronique (200), où ladite unité de traitement électronique (200) traite lesdits signaux de mouvement pour ajuster l'estimation de l'augmentation de l'usure (500).

10. Élément de freinage de véhicule comprenant un bloc d'usure en matériau de friction (20), une plaque de support arrière (40) dudit bloc de matériau de friction (20), un capteur de température (100) configuré et positionné pour détecter la température de ladite plaque de support arrière (40) et une unité de traitement électronique (200) configurée pour réaliser la méthode d'estimation de l'usure pour ledit élément selon l'une des revendications précédentes.

11. Méthode pour estimer l'usure dans l'élément de freinage d'un véhicule comprenant au moins un disque de frein (10), un bloc d'usure en matériau de friction (20) et une plaque de support arrière (40) dudit bloc de matériau de friction (20), au moins un capteur de température (100) configuré et positionné pour détecter la température de ladite plaque de support arrière (40), et une unité de traitement électronique (200) connectée au capteur de température (100), comprenant les actions suivantes :

    1. acquisition de l'évolution temporelle de la température par ledit capteur de température (100) ; la méthode étant **caractérisée par le fait qu'**elle comprend l'action suivante :
    2. création d'un modèle d'usure dans lequel une relation entre ladite usure et ladite évolution temporelle de la température est modélisée avec une équation différentielle, où l'estimation de l'usure est donnée par une solution analytique ou numérique de ladite équation différentielle.

12. Méthode pour estimer l'usure selon la revendication 11, **caractérisée par le fait que** ladite équation différentielle est :

$$dx(t)/dt = - \gamma \, g^{(\beta)} (dT(t)/dt, x(t), \ldots.)$$

où

    x(t) = fonction qui exprime la tendance au fil du temps (t) de l'épaisseur de l'élément de freinage ;
    T(t) = fonction qui exprime la tendance au fil du temps (t) de la température de l'élément de freinage ;
    (dT(t)/dt) = fonction dérivée au fil du temps de T(t) ;
    dx(t)/dt = fonction dérivée au fil du temps de x(t) ;
    $\gamma$ = paramètre ;
    $\beta$ = ensemble de paramètres de modulation.

FIG.1

40 30 20 10

100

**FIG.1a**

40 30 20 10

100

**FIG.1b**

40 30 20 10

100

**FIG.1c**

40 30 20 10

100

**FIG.1d**

40 30 20 10

100

**FIG.1e**

40 30 20 10

100

**FIG.1f**

**FIG.2**

EP 4 482 722 B1

FIG.3

**FIG.4**

FIG.5

## FIG.6

## Temperature and expected wear over time

x10⁴

## Temperature and expected wear over time

x10⁴

Time [s]

# FIG.7

FIG.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102021000005636
- DE 10233844 A1
- DE 19943352 A1
- US 20220343789 A1
- WO 2017188282 A1
- US 10486674 B2
- GB 2583486 A
- WO 2018099864 A1